(19) Europäisches Patentamt

European Patent Office

Office européen des brevets

(11) **EP 1 062 772 B1**

(12) **EUROPÄISCHE PATENTSCHRIFT**

(45) Veröffentlichungstag und Bekanntmachung des Hinweises auf die Patenterteilung:
**11.05.2005 Patentblatt 2005/19**

(21) Anmeldenummer: **99910262.7**

(22) Anmeldetag: **23.02.1999**

(51) Int Cl.7: **H04L 12/44**, H04L 12/417

(86) Internationale Anmeldenummer:
**PCT/EP1999/001163**

(87) Internationale Veröffentlichungsnummer:
**WO 1999/046892 (16.09.1999 Gazette 1999/37)**

(54) **BETRIEBSVERFAHREN FÜR EINEN DATENBUS MIT MEHREREN TEILNEHMERN**

OPERATING METHOD FOR A DATA BUS WITH A PLURALITY OF NODES

PROCEDE DE FONCTIONNEMENT POUR UN BUS DE DONNEES AVEC PLUSIEURS NOEUDS

(84) Benannte Vertragsstaaten:
**DE ES FR GB IT SE**

(30) Priorität: **10.03.1998 DE 19810293**

(43) Veröffentlichungstag der Anmeldung:
**27.12.2000 Patentblatt 2000/52**

(73) Patentinhaber: **Bayerische Motoren Werke Aktiengesellschaft**
**80809 München (DE)**

(72) Erfinder:
• **PELLER, Martin**
**D-82256 Fürstenfeldbruck (DE)**

• **MARSCHNER, Christian**
**D-80803 München (DE)**

(74) Vertreter: **Wesel-Mair, Julia**
**Bayerische Motoren Werke AG**
**Patentabteilung AJ-3**
**80788 München (DE)**

(56) Entgegenhaltungen:
**WO-A-85/03826       US-A- 4 761 799**
**US-A- 4 785 394     US-A- 5 161 153**

**Beschreibung**

Die Erfindung beschäftigt sich mit einem Betriebsverfahren für einen Datenbus mit mehreren Teilnehmern, wie er aus der nicht vorveröffentlichten Deutschen Patentanmeldung DE 19720401 A1 hervorgeht. Jedes Telegramm besitzt einen eindeutigen Identifier, der die Dringlichkeit des Telegramms bestimmt.

Der Datenbus besitzt für zumindest einen Teil der Teilnehmer optische Obertragungsstrecken bis hin zum Sternkoppler. Handelt es sich um einen elektrischen Sternkoppler, werden diese Telegramme in ein elektrisches Signaltelegramm umgewandelt und Ober eine Empfänger-Sende-Einheit wiederum in ein vorzugsweise optisches Signaltelegramm umgewandelt, das so zu allen übrigen Teilnehmern übertragen wird. Ein derartiger Datenbus mit zumindest teilweise optischen Übertragungsstrecken besitzt insoweit eine besondere Eigenschaft, als die Signallaufzeit, d. h. die Zeit für die Übertragung eines Signals (Telegramm) von einem Teilnehmer zum anderen wesentlich größer als die Bitzeit ist. Im Gegensatz dazu ist bei einem rein elektrischen Datenbus, wie er beispielsweise unter der Bezeichnung CAN in Fahrzeugen häufig verwendet wird, die Signallaufzeit wesentlich geringer als die Bitzeit. Eine weitere Schwierigkeit aufgrund stark unterschiedlicher Signallaufzeiten entsteht dann, wenn zusätzlich Teilnehmer am Sternkoppler angeschlossen sind, die selbst (nur) elektrische Signaltelegramme ausgeben.

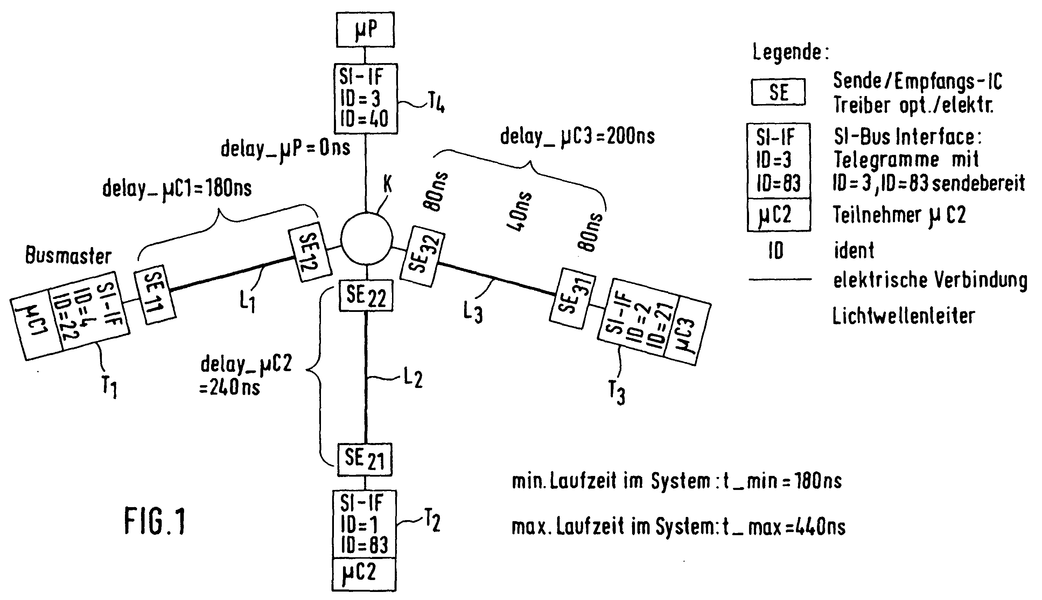

Ein Beispiel möge dies verdeutlichen. Es sei, wie in Figur 1 dargestellt, ein sternförmiges Bussystem mit insgesamt vier Teilnehmern T1 bis T4 angenommen, bei dem Teilnehmer T1, T2 und T3 über eine optische Übertragungsstrecke L1, L2 und L3 mit einem aktiven elektrischen Stemkoppler K verbunden sind. Zwischen den Teilnehmern T1 bis T3 und dem Sternkoppler K sind jeweils zwei SE-(=Sender/Empfänger-) Einheiten $SE_{11}$, $SE_{12}$, $SE_{21}$, $SE_{22}$, $SE_{31}$ und $SE_{32}$ angeordnet, bei denen das zunächst bei den Teilnehmern vorliegende elektrische Telegramm in ein optisches Sendesignal umgewandelt und in ein elektrisches Signaltelegramm rückgewandelt wird, das dann auf den Stemkoppler K gegeben wird. Umgekehrt werden die diesen Teilnehmern zugedachten optischen Telegramme vom Sternkoppler ausgehend zunächst in optische Telegramme und dann wiederum in elektrische Empfangssignale umgewandelt.

Ferner ist ein weiterer Teilnehmer T4 angeordnet, bei dem es sich um einen Teilnehmer handelt, der Ober eine elektrische Übertragungsstrecke unmittelbar mit dem Sternkoppler K verbunden ist.

Bedingt durch die Umwandlungszeit für die elektrischen in optische Signale und umgekehrt (etwa in der Größenordnung von je 60-100ns) und der Laufzeit in den optischen Übertragungsstrecken (ca. 5ns/m) ergeben sich Laufzeiten für Telegramme der Teilnehmer T1 bis T3 jeweils zum und vom Stemkoppler K, die im Ausführungsbeispiel exemplarisch mit 180, 240 und 200ns angegeben sind. Die Laufzeit der Signale von Teilnehmer T4 zum Sternkoppler K ist idealerweise gleich 0 ns.

Nimmt man beispielsweise ein Telegramm an, das vom Teilnehmer T1 zum Teilnehmer T2 über den Sternkoppler K gelangen soll, so ergibt sich dabei eine Laufzeit von mindestens 420ns, für ein Telegramm vom Teilnehmer T3 zu T2 sogar von 440 ns. Die minimale Signallaufzeit für Telegramme hier zwischen den Teilnehmern T1 und T4 beträgt 180 ns.

Es ist ohne weiteres zu erkennen, daß die Laufzeit im System stark von den jeweiligen individuellen Verzögerungszeiten in der Übertragungsstrecke der einzelnen Teilnehmern zum aktiven Sternkoppler abhängt und darüber hinaus wesentlich größer als die Bitzeit, hier beispielsweise gleich 100ns angenommen, ist.

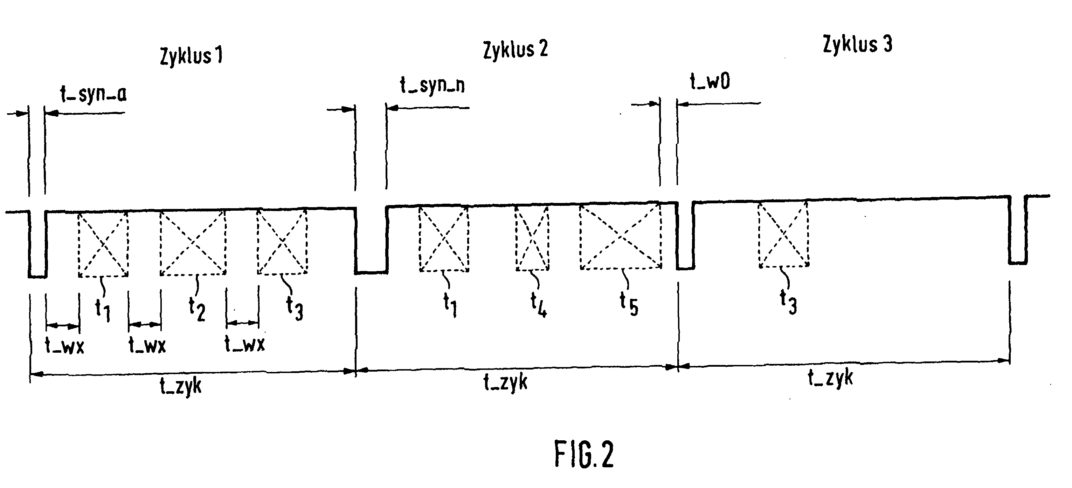

Es sei nun ein Signalverkehr auf dem Datenbus angenommen, wie er aus Fig. 2 und der eingangs genannten nicht vorveröffentlichten Deutschen Patentanmeldung hervorgeht. Zwischen zwei Synchronisationsimpulsen, die von einem Busmaster ausgegeben werden, findet auf dem Datenbus ein Datenverkehr statt. In jedem der mit Zyklus 1, Zyklus 2 und Zyklus 3 bezeichneten Zyklen werden maximal drei Telegramme ausgegeben, bei denen es sich um die Telegramme t1, t2 und t3 bzw. t1, t4 und t5, bzw. allein das Telegramm t3 handelt. Zwischen jedem der tatsächlich gesendeten Telegramme ist mindestens eine Wartezeit einzuhalten, die sich aus der nachfolgenden Formel ergibt Wartezeit:

$$t\_wx = t\_wx0 + t\_wx\_delta * (ID - ID_{x-1})$$

Dabei bedeutet t_wx0 einen fixen Anteil, der der eindeutigen Unterscheidung von Telegramm und Wartezeit dient,
t_wx_delta einen festen Multiplikationsanteil, der von der maximalen Signallaufzeit im Bussystem abhängt und
$ID - ID_{x-1}$ die Differenz der Telegramm-identifier. Dabei steht ID für den Identifier des tatsächlich vom Teilnehmer zu versendenden Telegrammes und $ID_{x-1}$ für den Identifier des zuletzt tatsächlich gesendeten Telegramms.

Wie ohne weiteres zu erkennen, ist der Abstand zwischen zwei gesendeten und hinsichtlich ihres Identifiers aufeinanderfolgenden Telegrammen, also zwischen den Telegrammen t1 und t2 bzw. t2 und t3 sowie zwischen t4 und t5 minimal, für hinsichtlich ihres Identifier nicht unmittelbar aufeinanderfolgende Telegramme wie t4 nach t1 im Zyklus 2, größer.

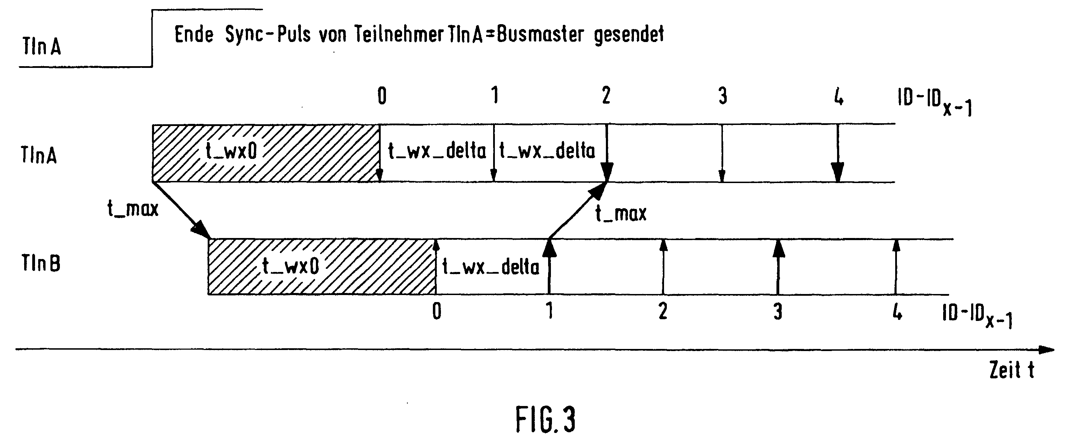

Anhand von Figur 3 soll die sich aus den Laufzeiten ergebende Berechnung des Multiplikationsanteils t_wx_delta erläutert werden:

Es seien zwei Teilnehmer, hier mit A und B bezeichnet, angenommen.Teilnehmer B sendet ein Telegramm mit ID=1 und Teilnehmer A ein Telegramm mit ID=2. Teilnehmer A sei ferner als Busmaster angenommen. Er sendet den Synchronisierungspuls und startet nach Ende des Synchronisierungspulses die Wartezeit t_wx. Der Teilnehmer B sieht das Ende des Synchronisierungspuls jedoch um t_max verzögert und startet somit t_max später seine Wartezeit t_wx. Teilnehmer B beginnt nach Ablauf der Wartezeit

$$t\_wx = t\_wx0 + t\_wx\_delta*1$$

mit dem Senden des Telegramms ID=1. Dieses Telegramm benötigt wiederum t_max, um bis zum Teilnehmer A zu gelangen. Teilnehmer A muß dieses Telegramm noch empfangen können, bevor er seinerseits mit dem Senden des Telegramms ID=2 beginnt. Folgende Formel muß also aus Sicht des Teilnehmers A erfüllt sein, um eine Kollision zu vermeiden:

$$\text{Startzeit Telegramm ID=2} > \text{Empfangszeit Telegramm ID=1}$$

$$t\_wx0 + 2*t\_wx\_delta > t\_max + t\_wx0 + t\_wx\_delta + t\_max$$

Daraus folgt:

$$t\_wx\_delta > 2 * t\_max$$

Bei der Beispielkonfiguration aus Abbildung 1 ergibt sich somit t_wx_delta=880ns. Bei großen Identifier-Differenzen, z.B. $(ID - ID_{x-1})$ =250 ergibt sich somit eine Wartezeit von über 220μs. Das bedeutet, daß bei einer geforderten Zykluszeit von beispielsweise 200μs Telegramme mit hohen Identifiern gar nicht gesendet werden können. Außerdem sinkt der Nettodatendurchsatz auch bei der Verwendung von kleinen ID's mit größer werdendem t_wx_delta.

Der Erfindung liegt die Aufgabe zugrunde, ein Betriebsverfahren für einen Datenbus mit mehreren Teilnehmern zu schaffen, bei dem der Wirkungsgrad erhöht wird, indem die Wartezeit zwischen den zu sendenden Telegrammen verringert wird.

Die Erfindung löst diese Aufgabe durch die Merkmale des Patentanspruchs 1.

Diese Lösung besteht kurzgefaßt darin, die system- und teilnehmerbedingten Laufzeitverzögerungen insbesondere zwischen den Teilnehmern und dem aktiven Sternkoppler anzugleichen. Im Idealfall soll diese Angleichung soweit durchgeführt werden, daß die Signallaufzeiten zwischen den Teilnehmern und dem Sternkoppler untereinander gleich sind. Die erfindungsgemäßen Maßnahmen bestehen darin, den Fixanteil der Wartezeit t_wx0 individuell anzupassen

Derartige Probleme treten bei einem Datenbus, wie er aus der WO 85/03826 A in Form eines drahtgebundenen Datenbusses nicht auf. Dort treten datenbusbauartbedingte Verzögerungen, wie sie für einen zumindest teilweise auf Lichtwellenleiterbasis arbeiteten Datenbus typisch sind, überhaupt nicht auf. Senden zwei Teilnehmer gleichzeitig, kommen beim bekannten Datenbus bekannte Kollisionsvermeidungsverfahren zur Anwendung.

Dasselbe gilt für einen ebenfalls drahtgebundenen Datenbus, der aus der US 4,761,799 bekannt ist. Nach einer anfänglichen inidalisierung wird jedem Teilnehmer ein definierter Zeitschlitz für seine Sendung zugeordnet und durch die sich so ergebende starre Sendefolge eine Kollision vermieden.

Die Erfindung wird durch verschiedene Maßnahmen konkretisiert. Diese Maßnahmen sind Gegenstand der Patentansprüche 2 und 3. Sie können gemeinsam oder auch alternativ angewandt werden. Diese Maßnahmen sind anhand der weiteren Figuren erläutert.

Es zeigt

Fig. 4 ein Diagramm zur Erläuterung der in Patentanspruch 2 angegebenen Maßnahme und
Fig. 5ein Diagramm zur Erläuterung der in Patentanspruch 3 angegebenen Maßnahme.

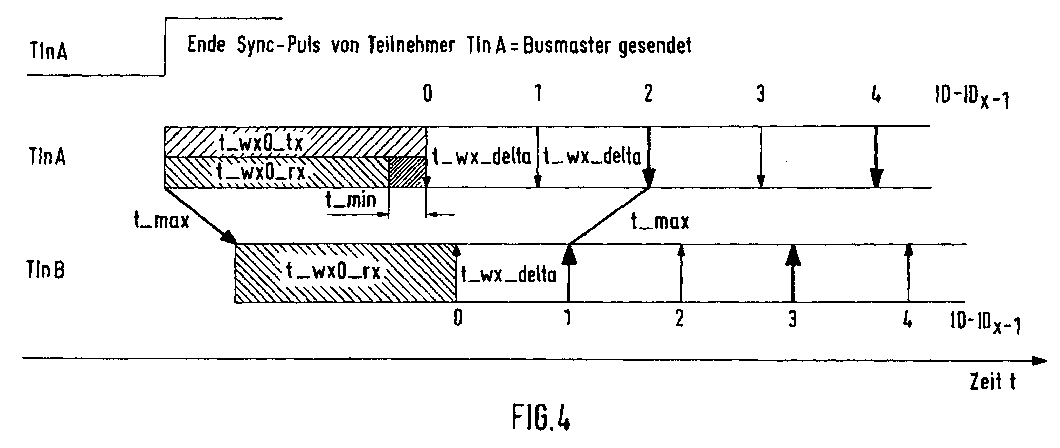

Wie im Patentanspruch 2 angegeben und in Fig. 4 dargestellt, unterscheiden die Teilnehmer den Sende- und Empfangsfall der letzten Busaktivität. Der Teilnehmer, der die letzte Busaktivität (Sync-Puls oder Telegramm) gesendet hat, wartet um t_min länger als die (= alle übrigen) Teilnehmer, die diese Busaktivität empfangen haben. An die Stelle des universellen Festanteils t_wx0 tritt nunmehr ein Festanteil t_wx0_tx für den Sendefall bzw. t_wx0_rx für den Empfangsfall. Es gilt:

$$t\_wx0\_tx = t\_wx0\_rx + t\_min \qquad \text{für den Sendefall}$$

$$t\_wx0\_rx \qquad \text{für den Empfangsfall}$$

Folgende Wartezeit muß aus Sicht des Teilnehmers A erfüllt sein, um eine Kollision zu vermeiden:

$$\text{Startzeit Telegramm ID=2} > \text{Empfangszeit Telegramm ID=1}$$

$$t\_wx0\_rx + t\_min + 2*t\_wx\_delta > t\_max + t\_wx0 + t\_wx\_delta + t\_max$$

Daraus folgt:

$$t\_wx\_delta > 2*t\_max - t\_min$$

Damit läßt sich bei der Beispielkonfiguration von Fig.1 der Wert von t_wx_delta von 880ns auf 700ns reduzieren.

Zusätzlich oder alternativ werden, wie im Patentanspruch 3 angegeben, die Fixanteile der Wartezeiten t_wx0_tx und t_wx0_rx für jeden Teilnehmer an seine individuelle Verzögerungszeit (hier: delay_tln genannt) angepaßt. Dies geschieht nach folgenden Formeln:

- $t\_wx0\_tx\_tln = (idle\_min - t\_wx\_delta) + delay\_tln\_max + delay\_tln$
- $t\_wx0\_rx\_tln = (idle\_min - t\_wx\_delta) + delay\_tln\_max - delay\_tln$

Die hierbei verwendeten Parameter haben folgende Bedeutung:

Tabelle 1

| Parameter: | Bedeutung: | Beispiel: |
|---|---|---|
| delay_tln | maximale Verzögerung eines Signales vom elektrischen Teil des Sternkopplers bis zum Teilnehmer tln im worst case | delay_µP, delay_µC1, delay_µC2, |
| delay_tln_max | Maximum (delay_tln_1, delay_tln_2, ...) | hier: delay_tln_max = 240ns |
| idle_min | Minimale "Bus Idle" Zeit zwischen Telegrammen | 1100ns |
| t_wx_delta | multiplikativer Faktor der Wartezeit | im Idealfall: t_max |

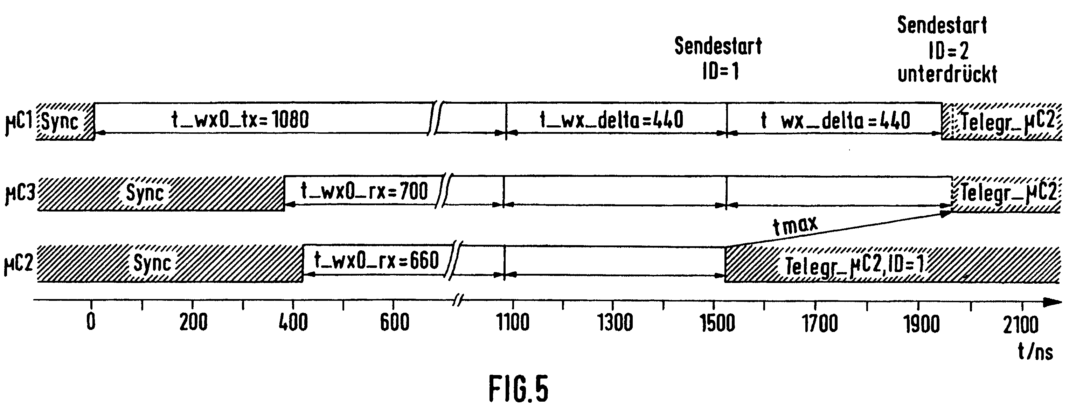

Wendet man diese Formeln auf die Buskonfiguration von Fig 1 an, so ergeben sich die Parameter wie sie in Fig 5 für die einzelnen Teilnehmer eingetragen sind. In Fig. 5 sind außerdem die Signalverläufe gezeigt, die die einzelnen Teilnehmer an ihrem Busanschluß sehen.

Man erkennt aus Fig. 5, daß durch die Anpassung des Fixanteils der Wartezeit t_wx0_tx und t_wx0_rx die Teilnehmer synchronisiert sind. Die Startzeit eines Telegramms hängt dann nicht mehr von den unterschiedlichen Signallaufzeiten im System (aus optischen und ggf. elektrischen Übertragungsstrecken von und zum Sternkoppler ) ab, sondern nur noch vom Identifier des zu sendenden Telegramms und der ggf. vorliegenden Belegung des Datenbuses durch ein (wichtigeres) Telegramm mit niedrigerem Identifier. Würden die Teilnehmer alle ein und dasselbe Telegramm mit identischem Identifier aussenden, würden sie dies gleichzeitig tun. Da nur jeweils ein Teilnehmer ein Telegramm mit einem bestimmten Identifier abschickt, ist eine Tetegrammkottision ausgeschlossen.

Damit gilt jetzt:

$$t\_wx\_delta >/= t\_max$$

Damit gelingt eine Halbierung des multiplikativen Anteils der Wartezeit t_wx_delta. In der Beispielkonfiguration von Fig 1 bedeutet dies für t_wx_delta einen Wert von 440ns gegenüber 880ns. Hohe Identifier, z.B. ID=250, haben eine Wartezeit von ca. t_wx = 110μs, können also innerhalb eines Zyklus von 200μs noch gesendet werden.

Da im normalen Busbetrieb viele verschiedene und damit auch höhere Identifier zum Einsatz kommen, werden nur selten direkt aufeinanderfolgende Identifier innerhalb eines Rahmens gesendet. Deshalb bewirkt man durch die Halbierung von t_wx_delta annähernd eine Halbierung der Wartezeiten t_wx. Dies hat wiederum nahezu eine Verdopplung der Nettodatenrate zur Folge. Insgesamt wird also der Wirkungsgrad des Protokolls erhöht. Bei einer festgelegten Nettodatenrate kann somit die Bruttodatenrate gesenkt werden. Dadurch sind Kosteneinsparungen möglich, weil aufgrund der niedrigeren Signalfrequenzen z.B. der EMV-Schutz einfacher gestaltet werden kann und an die Bauteile keine so hohen Anforderungen gestellt werden müssen.

Zur Realisierung der Erfindung sind in den Teilnehmern nicht dargestellte Anpassungs- und Logikglieder vorgesehen, die die angegebenen Angleichungen der Startzeitpunkte für die Telegramme in Abhängigkeit von der unmittelbar vorausgehenden Tätigkeit (Senden oder Empfangen) des Teilnehmers selbst und der individuellen Signallaufzeit zwischen Teilnehmer und dem Sternkoppler vornehmen. Da wie gezeigt die wesentlichen Laufzeitunterschiede zwischen Teilnehmern mit elektrischer Anbindung und den Teilnehmern mit optischer Anbindung vorliegen, genügt es, diese Laufzeitunterschiede näherungsweise auszugleichen, indem nur die Teilnehmer mit elektrischer Anbindung um eine Zeitspanne verzögert auf Sendung gehen, die etwa gleich der mittleren Verzögerungszeit der Teilnehmer des anderen Typus (mit optischer Anbindung) ist. Ein ausreichender Näherungswert ergibt sich beispielsweise zu 210ns.

**Patentansprüche**

1. Betriebsverfahren für einen Datenbus mit mehreren Teilnehmern,
**gekennzeichnet durch** folgende Merkmale:

   die Teilnehmer stehen über einen Sternkoppler miteinander in Verbindung,
   zumindest ein Teil der Teilnehmer ist über einen Lichtwellenleiter mit dem Stemkoppler verbunden,
   die Teilnehmer werden **durch** Synchronisationspulse synchronisiert,
   von den Teilnehmern werden Telegramme mit einer hierarchischen Sendefolge ausgesandt,
   mit Hilfe von Anpassungsgliedern werden Sendestartzeitpunkte der Telegramme so eingestellt, dass die system- und teilnehmerbedingten Laufzeitverzögerungen zwischen den Teilnehmem und dem aktiven Stemkoppler angeglichen werden, so dass die Sendestartzeitpunkte unabhängig vom jeweiligen Teilnehmer und nur noch abhängig von der Sendefolge sind.

2. Betriebsverfahren nach Anspruch 1, **dadurch gekennzeichnet, dass** durch die Anpassungsglieder der Sendestartzeitpunkt für das Telegramm eines Teilnehmers, der vorausgehend selbst ein Telegramm gesendet hat, später ist als bei dem Teilnehmer, der vorausgehend ein Telegramm eines anderen Teilnehmers empfangen hat.

3. Betriebsverfahren nach Anspruch 1 oder 2, **dadurch gekennzeichnet, daß** durch die Anpassungsglieder für jeden Teilnehmer innerhalb eines Zeittaktes vorab eine Verzögerungszeit eingestellt wird, deren Länge komplementär zur Signallaufzeit zwischen dem Teilnehmer und dem Sternkoppler ist.

4. Betriebsverfahren nach Anspruch 3, **dadurch gekennzeichnet, daß** die Verzögerungszeit vom Typ der Anbindung des Teilnehmers an den Sternkoppler abhängt.

**Claims**

1. An operating method for a data bus with a plurality of nodes, **characterised by** the following features:

the nodes are connected to one another via a star coupler,

at least some of the nodes are connected to the star coupler via an optical waveguide,

the nodes are synchronised by synchronisation pulses,

messages with a hierarchical transmission sequence are transmitted by the nodes,

transmission starting instants of the messages are adjusted with the aid of adaptation elements such that the delay times caused by the system and nodes, between the nodes and the active star coupler are matched such that the transmission starting instants are independent of the respective node and only dependent on the transmission sequence.

2. An operating method according to claim 1, **characterised in that**, owing to the adaptation elements, the transmission starting instant for the message of a node, which has itself previously transmitted a message, is later than in the case of a node which has previously received a message from another node.

3. An operating method according to claim 1 or 2, **characterised in that**, owing to the adaptation elements for each node within a time cycle, a delay time is adjusted in advance, the length of which is complementary to the signal delay between the node and the star coupler.

4. An operating method according to claim 3, **characterised in that** the delay time is dependent on the type of connection of the node to the star coupler.

**Revendications**

1. Procédé de fonctionnement pour un bus de données avec plusieurs participants,
   **caractérisé en ce que**
   les participants sont reliés ensemble par un coupleur en étoile,
   au moins une partie des participants est reliée au coupleur en étoile par un guide d'ondes lumineuses,
   les participants sont synchronisés par des impulsions de synchronisations,
   les participants émettent des télégrammes selon une suite hiérarchique d'émission,
   à l'aide d'éléments d'adaptation, des instants de début d'émission des télégrammes sont réglés de manière telle que les retards du fait du système et des participants entre les participants et le coupleur actif en étoile sont adaptés si bien que les instants de début d'émission sont indépendants du participant en cause et deviennent seulement dépendants de la suite d'émission.

2. Procédé selon la revendication 1,
   **caractérisé en ce que**
   grâce aux éléments d'adaptation, l'instant de début d'émission du télégramme d'un participant qui a précédemment lui-même émis un télégramme se situe plus tard que dans le cas d'un participant qui a précédemment reçu un télégramme d'un autre participant.

3. Procédé selon la revendication 1 ou 2,
   **caractérisé en ce que**
   grâce aux éléments d'adaptation, une durée de retard est avant tout réglée au sein d'une période pour chaque participant, dont la longueur est complémentaire à la durée de parcours de signal entre le participant et le coupleur en étoile.

4. Procédé selon la revendication 3,
   **caractérisé en ce que**
   la durée de retard est dépendante du type de la liaison du participant au coupleur en étoile.

FIG.1

μP

SI-IF
ID=3
ID=40
T4

delay_μP = 0ns

delay_μC3 =200ns

delay_μC1 =180ns

80ns

40ns

80ns

K

Busmaster

SE 12

SE 32

μC1
SI-IF
ID=4
ID=22

SE 11

L1

SE 22

SE 31
SI-IF
ID=2
ID=21
μC3

T1

delay_μC2
=240ns

L3

L2

T3

SE 21

SI-IF
ID=1
ID=83
μC2
T2

Legende:

SE — Sende/Empfangs-IC Treiber opt./elektr.

SI-IF
ID=3
ID=83 — SI-Bus Interface: Telegramme mit ID=3, ID=83 sendebereit

μC2 — Teilnehmer μ C2

ID — ident

——— elektrische Verbindung

Lichtwellenleiter

min. Laufzeit im System : t_min = 180ns

max. Laufzeit im System: t_max =440ns

EP 1 062 772 B1

FIG.2

EP 1 062 772 B1

TIn A

Ende Sync–Puls von Teilnehmer TInA=Busmaster gesendet

0    1    2    3    4    $ID-ID_{x-1}$

TIn A

t_wx0    t_wx_delta | t_wx_delta

t_max

t_max

TIn B

t_wx0    t_wx_delta

0    1    2    3    4    $ID-ID_{x-1}$

Zeit t

FIG.3

TInA

Ende Sync-Puls von Teilnehmer TIn A = Busmaster gesendet

$$0 \qquad 1 \qquad 2 \qquad 3 \qquad 4 \qquad ID\text{-}ID_{x-1}$$

TInA

t_wx0_tx

t_wx0_rx

t_wx_delta | t_wx_delta

t_min

t_max

t_max

TInB

t_wx0_rx

t_wx_delta

$$0 \qquad 1 \qquad 2 \qquad 3 \qquad 4 \qquad ID\text{-}ID_{x-1}$$

Zeit t

FIG.4

EP 1 062 772 B1

FIG.5

EP 1 062 772 B1